# EUROPÄISCHE PATENTSCHRIFT

(11) **EP 3 140 561 B1**
(45) Veröffentlichungstag und Bekanntmachung des Hinweises auf die Patenterteilung: **22.08.2018**
(21) Anmeldenummer: 15726526.5
(22) Anmeldetag: 16.04.2015
(51) Int. Cl.: F16D 27/02

(54) **KUPPLUNGSEINRICHTUNG MIT WIRBELSTROMBREMSE MIT REDUZIERTEM LUFTSPALT**
COUPLING DEVICE WITH EDDY CURRENT BRAKE WITH REDUCED AIR GAP
ENGRENAGE D'ACCOUPLEMENT À FREIN À COURANTS PARASITES À ENTREFER RÉDUIT

(30) Priorität: 09.05.2014 DE 102014208697
(43) Veröffentlichungstag der Anmeldung: 15.03.2017
(73) Patentinhaber: Schaeffler Technologies AG & Co. KG, 91074 Herzogenaurach (DE)
(72) Erfinder: FINKENZELLER, Marc, 77723 Gengenbach (DE); HELMER, Daniel, 77883 Ottenhöfen (DE)
(86) Internationale Anmeldenummer: PCT/DE2015/200259
(87) Internationale Veröffentlichungsnummer: WO 2015/169308

(56) Entgegenhaltungen:
- DE-A1- 3 443 523
- FR-A1- 2 865 867
- US-A- 2 563 424
- US-A- 2 965 777

## Beschreibung

Die Erfindung betrifft eine Wirbelstrombremse für eine Kupplungsvorrichtung, umfassend einen Bremsenrotor mit einem elektrisch leitenden Bremsbereich, welcher in einem, durch eine Spule ausgebildeten Magnetfeld bewegbar ist, gemäß dem Oberbegriff des Anspruchs 1.

In Hybridfahrzeugen sind zum Antrieb des Hybridfahrzeuges häufig ein Verbrennungsmotor und ein elektrischer Fahrmotor vorgesehen. Das Hybridfahrzeug kann dabei entweder nur durch den Verbrennungsmotor, nur durch den elektrischen Fahrmotor oder durch beide angetrieben werden. Um bei rein elektrischem Fahrbetrieb den Verbrennungsmotor zu starten oder diesen an den Antriebsstrang anzukuppeln, ist eine Kupplungsvorrichtung vorgesehen, welche einen elektrischen Aktuator, z.B. eine Wirbelstrombremse umfasst. Die Wirbelstrombremse umfasst einen elektrisch leitenden Bremsbereich, z.B. eine metallische Scheibe, welcher in einem steuerbaren Magnetfeld bewegt wird, das von einer Spule erzeugbar ist. Bei der Bewegung der metallischen Scheibe in dem Magnetfeld werden in dieser Spannungen und in dessen Folge Wirbelströme induziert, die ihrerseits eigene, dem äußeren Magnetfeld entgegengesetzte Magnetfelder erzeugen, die die elektrisch leitende Fläche abbremsen. Dadurch wird die Momentenkennlinie der Kupplung eingestellt.

Eine solche Kupplung mit elektrischem Aktuator ist in der DE 10 2012 222 830 A1 offenbart.

Eine solche Kupplung mit Wirbelstrombremse ist in der deutschen Patentanmeldung 10 2013 223 044.3 offenbart. Die dortige Wirbelstrombremse weist eine Zentralspule auf und gegeben durch die spezielle Bauform, bei der die Spule nur einer Seitenfläche der metallischen Bremsscheibe gegenüberliegt, ist eine sehr platzsparende Anordnung der Spulenanordnung bei gleichzeitig großer wirksamer Wirbelstromfläche gegeben.

Aus der FR 2 865 867 A1 ist eine Kupplungsvorrichtung gemäß dem Oberbegriff des Anspruchs 1 bekannt.

Bezüglich weiteren Standes der Technik wird auf die DE 34 43 523 A1, die US 2 965 777 A und die US 2 563 424 A verwiesen.

Die Erfinder haben sich die Aufgabe gestellt, die Sicherheit der Kupplungseinrichtung des Stands der Technik zu erhöhen.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Eine Kupplungsvorrichtung weist eine Betätigungseinrichtung auf, wobei die Betätigungseinrichtung eine elektrische Wirbelstrombremse aufweist, wobei die Wirbelstrombremse einen Bremsenstator mit wenigstens einer Spule und einen Bremsenrotor mit einem Bremsbereich aufweist, wobei der Bremsbereich eine erste Schicht aufweist, die elektrisch leitend ist und die eine erste Seitenfläche und eine zweite Seitenfläche aufweist, wobei die erste Seitenfläche der Spule zugewandt ist und die zweite Seitenfläche der Spule abgewandt ist, und wobei der Bremsbereich eine zweite Schicht aufweist, die magnetisch ist und die mit der zweiten Seitenfläche verbunden ist.

Hierdurch kann einerseits weiterhin eine kompakte Bauform beibehalten werden. Andererseits können gleichzeitig die vorhandenen Luftspalte im Vergleich zum Stand der Technik minimiert werden. So ist es nun möglich, einen Luftspalt, der zwischen der Rückseite bzw. der zweiten Schicht und dem angrenzenden Bauteil, z.B. ein Teil des Bremsenstators, vorhanden ist zu vergrößern, da sich der magnetische Kreis nun nicht mehr primär über diesen Luftspalt schließen muss. Somit wird die Fehlfunktion durch die Berührung des Bremsrotors mit dem entsprechenden angrenzenden Bauteil vermieden. Durch die an der zweiten Seitenfläche angeordnete zweite Schicht kann sich der magnetische Kreis nun vorteilhaft bereits im Bremsenstator schließen und das Magnetfeld verläuft nicht, über einen zweiten Luftspalt zwischen zwei relativ zueinander bewegten Bauteilen. Somit wird insgesamt die Dicke des Wegs des Magnetfelds durch Luftspalte reduziert und somit wird weiterhin die magnetische Flussdichte und damit das Bremsmoment der Wirbelstrombremse gesteigert. Weiterhin wird durch die zweite Schicht die Wärmekapazität des Bremsrotors erhöht, so dass dieser sich bei der Generierung eines Bremsmoments (z.B. für den Motorstart oder im Schubbetrieb zur Ankopplung des Verbrenners) weniger erwärmt.

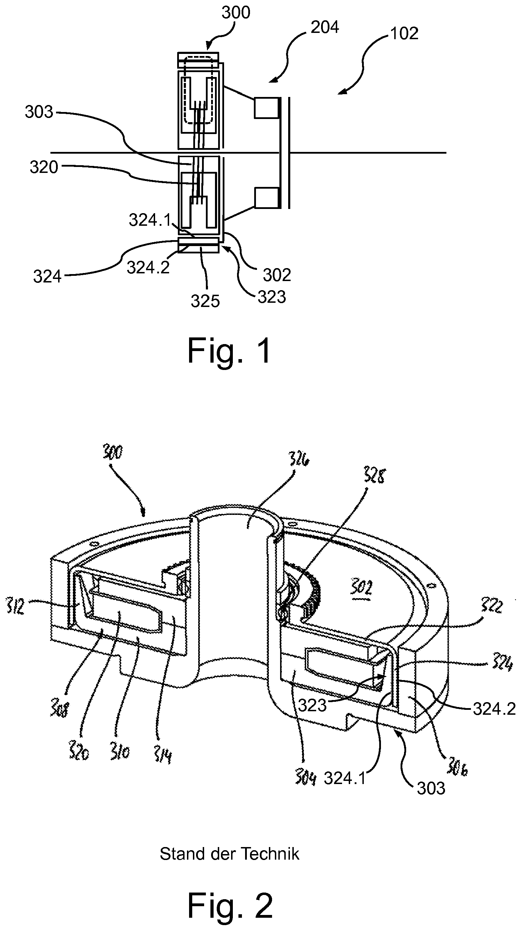

Die Kupplungsvorrichtung ist bevorzugt eine Kupplungsvorrichtung für einen Antriebsstrang eines Kraftfahrzeugs, wobei der Antriebsstrang eine Brennkraftmaschine, eine elektrische Maschine mit einem Stator und einen Rotor und eine Getriebeeinrichtung aufweist, wobei die Kupplungsvorrichtung in dem Antriebsstrang zwischen der Brennkraftmaschine einerseits und der elektrischen Maschine sowie der Getriebeeinrichtung andererseits anordenbar oder angeordnet ist. Die Kupplungsvorrichtung ist insbesondere zum Starten und/oder Zuschalten der Brennkraftmaschine im Antriebsstrang eines Hybridfahrzeuges eingerichtet. Sie ist besonders bevorzugt eine Zuschaltkupplung (sog. E-Clutch) für einen hybriden Antriebsstrang. Bevorzugt ist sie eine, bevorzugt trockene, Lamellenkupplung. Bevorzugt ist sie in einen Rotor der elektrischen Maschine des Antriebsstrangs integriert. Die Zuschaltkupplung ist bevorzugt eingerichtet, die Brennkraftmaschine an den Antriebsstrang anzukoppeln bzw. vom Antriebsstrang abzukoppeln. Die Kupplungseinrichtung ist bevorzugt bis auf die erfindungsgemäße Ausgestaltung der Wirbelstrombremse mit zwei Schichten identisch zu der in der deutschen Patentanmeldung 10 2013 223 044.3 offenbarten Kupplung mit all deren Merkmalen, insbesondere der Kupplung der dortigen Fig. 2.

Die Wirbelstrombremse ist bevorzugt eingerichtet, ein Vorsteuermoment aus einer Rotation des Rotors der elektrischen Maschine zu erzeugen. Bevorzugt wird das Vorsteuermoment über die Betätigungseinrichtung in ein (teilweises) Einrücken der Kupplungsvorrichtung umgeformt. Das Erzeugen des Vorsteuermomentes durch die Wirbelstrombremse ermöglicht ein schnelles Zuschalten des Verbrennungsmotors, wobei die Wirbelstrombremse verschleißfrei arbeitet.

Die Betätigungseinrichtung ist bevorzugt eingerichtet, die Kupplung zu öffnen und zu schließen. Bevorzugt weist die Betätigungseinrichtung zwei zueinander verdrehbare Rampen auf, mittels welcher eine axiale Verschiebung einer Anpressplatte gegenüber einer Druckplatte der Kupplungsvorrichtung durch Verdrehung durchführbar ist. Bevorzugt weist die Betätigungseinrichtung ein Planetengetriebe auf, auf welches die Wirbelstrombremse einwirkt. Durch dieses Planetengetriebe wird das von der Wirbelstrombremse erzeugte Vorsteuermoment verstärkt und somit die Wirkung der Wirbelstrombremse erhöht.

Z.B. ist bei reinem elektromotorischen Antrieb die Zuschaltkupplung offen, so dass die Brennkraftmaschine vom Antriebsstrang abgekoppelt ist. Wenn eine höhere Leistung benötigt wird oder der elektrische Energievorrat zur Neige geht, wird die Brennkraftmaschine durch teilweise Schließen der Zuschaltkupplung gestartet, indem die Zuschaltkupplung in den Schubbetrieb geht. Bevorzugt wird hierzu die Wirbelstrombremse geschlossen, so dass innerhalb der Zuschaltkupplung die Wirbelstrombremse eine der Rampen bremst, so dass eine Drehzahldifferenz der verdrehbaren Rampen entsteht, in Folge der die Zuschaltkupplung zumindest teilweise einrückt. Hierdurch wird die Brennkraftmaschine durch den Elektromotor gestartet. Wenn die Brennkraftmaschine schneller als der Elektromotor dreht (d.h. in den Zugbetrieb übergeht), schließt sich ein Freilauf, wodurch die Zuschaltkupplung vollständig eingerückt wird. Wenn sich der Freilauf im Zugbetrieb schließt, überträgt die Brennkraftmaschine einen Teil ihres Drehmoments über ein mit dem Freilauf verbundenes, zusätzliches Sonnenrad, sowie die Planeten und das Hohlrad eines Planetengetriebes, auf die hohlradseitige Rampe, so dass die Zuschaltkupplung vollständig eingerückt wird und dann das gesamte Drehmoment der Brennkraftmaschine im Zugbetrieb übertragen kann. Wenn die Wirbelstrombremse geöffnet wird, erfolgt das Ausrücken der Kupplung z.B. durch beim Einrücken vorgespannte Blatt- oder Schraubenfedern. Die Brennkraftmaschine wird bevorzugt während oder nach dem Ausrückvorgang ausgeschaltet.

Der Bremsenstator ist bevorzugt ein Bauteil, welches relativ gegenüber dem Bremsenrotor verdrehbar ist. Er weist bevorzugt eine Zentralspule als einzige Spule auf. Die Zentralspule weist bevorzugt eine rotationssymmetrische Form auf, bevorzugt konzentrisch zur Rotationsachse der Wirbelstrombremse. Der Bremsenstator weist bevorzugt einen ersten Klauenpol mit ersten Polklauen und einen zweiten Klauenpol mit zweiten Polklauen auf. Bevorzugt ist dabei die Zentralspule von dem ersten Klauenpol mit seinen ersten Polklauen und dem zweiten Klauenpol mit seinen zweiten Polklauen umgriffen.

Bevorzugt weist der erste Klauenpol einen Scheibenabschnitt auf. Der Scheibenabschnitt weist bevorzugt einen radial äußeren Rand auf. Die ersten Polklauen sind bevorzugt an dem radial äußeren Rand des Scheibenabschnitts angeordnet. Die ersten Polklauen sind bevorzugt zumindest abschnittsweise zu dem Scheibenabschnitt des ersten Klauenpols in etwa rechtwinklig abgewinkelt. Die ersten Polklauen sind bevorzugt an dem Scheibenabschnitt des ersten Klauenpols in Umfangsrichtung verteilt angeordnet. Zwischen den ersten Polklauen sind bevorzugt Lücken gebildet.

Bevorzugt weist der zweite Klauenpol einen Scheibenabschnitt auf. Der Scheibenabschnitt weist bevorzugt einen radial äußeren Rand auf. Die zweiten Polklauen sind bevorzugt an dem radial äußeren Rand des Scheibenabschnitts angeordnet. Die zweiten Polklauen sind bevorzugt zumindest abschnittsweise zu dem Scheibenabschnitt des ersten Klauenpols in etwa rechtwinklig abgewinkelt. Die zweiten Polklauen sind bevorzugt an dem Scheibenabschnitt des zweiten Klauenpols in Umfangsrichtung verteilt angeordnet. Zwischen den zweiten Polklauen sind bevorzugt Lücken gebildet.

Der erste Klauenpol und der zweite Klauenpol sind bevorzugt mit ihren Scheibenabschnitten zueinander parallel und voneinander beabstandet angeordnet. Die ersten Polklauen und/oder die zweiten Polklauen weisen bevorzugt jeweils ein freies Ende auf. Der erste Klauenpol und der zweite Klauenpol sind bevorzugt derart angeordnet, dass die freien Enden der ersten Polklauen und die freien Enden der zweiten Polklauen einander entgegengerichtet sind. Bevorzugt greifen die ersten Polklauen und die zweiten Polklauen jeweils wechselnd ineinander. Die ersten Polklauen greifen bevorzugt in die zwischen den zweiten Polklauen gebildeten Lücken ein. Die zweiten Polklauen greifen bevorzugt in die zwischen den zweiten Polklauen gebildeten Lücken ein. Bevorzugt sind die freien Enden der ersten Polklauen und/oder die freien Enden der zweiten Polklauen jeweils schmal zulaufend ausgeführt.

Der Bremsenstator weist bevorzugt einen Innenstator auf, welcher die (Zentral-)Spule und bevorzugt die Klauenpole aufweist und der Bremsenrotor befindet zumindest teilweise radial außerhalb des Innenstators.

Der Bremsenrotor ist bevorzugt ein Bauteil, welches relativ gegenüber dem Bremsenstator verdrehbar ist.

In dem Bremsbereich des Bremsenrotors sind die Wirbelströme durch ein von dem Bremsenstator ausgehendes Magnetfeld erzeugbar. Der Bremsbereich ist bevorzugt ein zylindermantelförmiger und/oder ein scheibenförmiger Teilbereich des Bremsenrotors.

Bevorzugt ist der Bremsenrotor scheibenartig ausgebildet, besonders bevorzugt topfartig ausgebildet, d.h. er weist einen sich radial erstreckenden, bevorzugt scheibenförmigen Abschnitt bzw. Bodenabschnitt auf und einen sich axial erstreckenden, bevorzugt zylindermantelförmigen Abschnitt bzw. Wandabschnitt. Er kann dabei einstückig oder mehrstückig sein. Der Bremsbereich ist dabei bevorzugt Teil des sich radial erstreckenden Abschnitts und/oder des sich axial erstreckenden Abschnitts oder der sich radial erstreckende Abschnitt und/oder der sich axial erstreckende Abschnitt sind durch den Bremsbereich gebildet. Besonders bevorzugt befindet sich der Bremsbereich zumindest teilweise radial außerhalb des Innenstators. Z.B. weist der Bremsenrotor eine topfartige Form mit einem Wandabschnitt als Bremsbereich auf und der Wandabschnitt ist radial außerhalb des Innenstators angeordnet. Bevorzugt weist der Innenstator dabei Polklauen auf, welche direkt dem Bremsbereich gegenüberliegen und durch einen Luftspalt von diesem beabstandet sind. Der Bremsenrotor weist bevorzugt dabei auch einen Bodenabschnitt auf und ist mit diesem Bodenabschnitt an dem Scheibenabschnitt des zweiten Klauenpols mit einem dazwischenliegenden Abstand angeordnet, wobei bevorzugt Bodenabschnitt und Scheibenabschnitt parallel zueinander angeordnet sind.

Die erste Schicht (auch als erste Materialschicht bezeichenbar) des Bremsbereichs weist bevorzugt eine maximale Dicke von 10 mm bevorzugt 5 mm, besonders bevorzugt 1 mm auf. Besonders bevorzugt weist sie eine (im Wesentlichen, d.h. z.B. mit Toleranz von ± 0,1 mm) gleichbleibende Dicke auf. Aus mechanischer und thermischer Sicht ist eine möglichst große Materialstärke bzw. Dicke (5-10 mm) zu wählen. Zudem verringert sich der Widerstand (größerer Querschnitt) bei einer möglichst großen Materialstärke wodurch die Position des maximalen Momentes optimiert werden kann. Die reale Materialstärke wird allerdings hauptsächlich durch die Wahl des Materials beeinflusst. Handelt es sich um ein ferromagnetisches Material (z.B. Eisen), so hat eine steigende Materialstärke keinen Einfluss auf den Luftspalt im magnetischen Kreis (Luftspalt entspricht lediglich dem optisch erkennbaren Luftspalt zwischen Magnetpol und elektrisch leitendem Material). Wird hingegen ein paramagnetisches Material (z.B. Alu, Nickel) oder diamagnetisches Material (z.B. Kupfer) verwendet, so nimmt der Luftspalt mit steigender Materialstärke zu, da das Scheibenmaterial die gleiche Permeabilität wie Luft hat (Luftspalt entspricht dem optisch erkennbaren Luftspalt plus der Dicke des elektrisch leitenden Materials). Ein größer werdender Luftspalt wirkt sich negativ auf das Magnetfeld aus, da der magnetische Widerstand steigt und somit die Flussdichte im Luftspalt bei sonst gleicher Magnetgeometrie sinkt. Dies hat wiederum ein verringertes Bremsmoment der Wirbelstrombremse zur Folge. Aus diesem Grund liegt die Materialstärke bei para- und diamagnetischen Materialien in der Regel im Bereich von 1-3 mm.

Die erste Schicht besteht bevorzugt aus einem (ersten) Material, das elektrisch leitend ist, damit sich in ihm die Wirbelströme vorteilhaft ausbilden können. Es ist bevorzugt ein möglichst gut elektrisch leitendes Material. Bevorzugt weist das Material eine elektrische Leitfähigkeit von mehr als 15·10⁶ S/m, besonders bevorzugt mehr als 30·106 S/m auf (jeweils bei einer Temperatur von 300K). Z.B. ist das erste Material bevorzugt Eisen, Wolfram, Nickel. Besonders bevorzugt ist das erste Material Messing, Kupfer oder Aluminium. Die Wahl des elektrisch leitenden Materials wird in der Regel im Hinblick auf die geometrischen Abmessungen der Scheibe und der daraus resultierenden Relativgeschwindigkeit des "bewegten Leiters" sowie des gewünschten Drehzahl bzw. Wirkbereiches der Wirbelstrombremse durchgeführt. Mit steigendem spezifischem elektrischem Widerstand wird das maximale Bremsmoment erst bei höherer Relativgeschwindigkeit erreicht. Somit erfordern Anwendungen mit kleinem Wirkradius des elektrisch leitenden Materials und der Position des maximalen Moments bei kleinen Drehzahlen ein Material mit geringem spezifischem elektrischem Widerstand (z.B. Kupfer, Alu). Ist der Wirkradius hingegen größer und soll das maximale Moment erst bei größerer Scheibendrehzahl erreicht werden, so genügt ein Material mit größerem elektrischem Widerstand (z.B. Stahl).

Die erste und die zweite Seitenfläche der ersten Schicht sind bevorzugt zwei bevorzugt im Wesentlichen parallel zueinander liegende Grenzflächen der ersten Schicht. Bei einem zylindermantelförmigen Bremsbereich sind dies z.B. eine innere und äußere Mantelfläche, bei einem scheibenförmigen Bremsbereich eine vordere Axialfläche und hintere Axialfläche des.

Die erste Seitenfläche ist der Spule zugewandt und die zweite Seitenfläche ist der Spule abgewandt. D.h. bevorzugt, dass die Spule, besonders bevorzugt der Mittelpunkt der Spule, einen kleineren Minimalabstand zu der ersten Seitenfläche aufweist als zu der zweiten Seitenfläche. Hierdurch sind mittels der Spule in Folge eines durch die Spule fließenden Stroms zwei Magnetpole bildbar, die beide auf einer Seite des Bremsbereichs angeordnet sind, d.h. näher an dieser Seite sind, so dass das Magnetfeld beider Pole ausgehend von dem jeweiligen Pol zunächst die erste Seitenfläche und erst dann die zweite Seitenfläche der ersten Schicht des Bremsbereichs durchdringt. Hierdurch wird ein Schließen des magnetischen Kreises aus Sicht der Spule jenseits der ersten Schicht des Bremsbereichs erzwungen, so dass im Ergebnis eine Magnetfeldlinie die erste Schicht des Bremsbereichs zweimal durchlaufen muss, was zu einer noch effizienteren Wirbelstromerzeugung führt.

Die zweite Schicht (auch als zweite Materialschicht bezeichenbar) weist bevorzugt eine minimale Dicke von mehr als 10 mm bevorzugt mehr als 5 mm, besonders bevorzugt mehr als 1 mm auf. Besonders bevorzugt weist sie eine (im Wesentlichen, d.h. z.B. mit Toleranz von ± 0,1 mm) gleichbleibende Dicke auf. Besonders bevorzugt ist Materialstärke bzw. Dicke positionsabhängig. Sie ist prinzipiell so festzulegen, dass sich im gesamten magnetischen Kreis eine konstante Flussdichte - bei maximaler elektrischer Spulenleistung nahe der Sättigungspolarisation des verwendeten Materials - ergibt. Dies führt zu einer bestmöglichen Materialausnutzung und kann sehr einfach z.B. durch gesinterte Bauteile erreicht werden. Werden die Klauenpole hingegen aus Blech umgeformt, so ist darauf zu achten, dass die größte Flussdichte im Bereich der Pole auftritt. Wie aus Figur 2 hervorgeht, sind die Pole zudem spitz zulaufend ausgeführt, sodass sich im Luftspalt über die gesamte Breite ein konstantes Magnetfeld einstellt.

Die zweite Schicht ist magnetisch, damit sich in ihr der magnetische Kreis vorteilhaft schließen kann. Die Schicht besteht bevorzugt aus einem (zweiten) Material mit einer möglichst hohen magnetischen Permeabilität, besonders bevorzugt ein ferromagnetisches Material. Es weist bevorzugt eine relative Permeabilität µr von mindestens 200, bevorzugt mindestens 2000 auf. Bevorzugt besteht die zweite Schicht aus Eisen (mit einem möglichst hohen Reinheitsgrad), niedrig legiertem Stahl oder einer anderen Legierung wie z.B. Mu-Metall oder Fe-Si-Legierung.

Die zweite Schicht ist bevorzugt drehfest gegenüber der ersten Schicht. Die zweite Schicht ist bevorzugt mit der zweiten Seitenfläche der ersten Schicht drehfest verbunden. Die zweite Schicht ist bevorzugt drehfest mit dem Bremsenrotor verbunden. Bevorzugt ist die erste Schicht zwischen der zweiten Schicht und der ersten Seitenfläche der ersten Schicht angeordnet. Bevorzugt ist die zweite Schicht an die zweite Seitenfläche der ersten Schicht befestigt oder die erste Schicht ist an die zweite Schicht über die zweite Seitenfläche der ersten Schicht befestigt. Die eine Schicht ist an die andere Schicht bevorzugt angeschweißt, angeschraubt oder besonders bevorzugt angepresst bzw. aufgepresst. Die zweite Schicht ist bevorzugt in Umfangsrichtung des Bremsrotors durchgehend im Bremsbereich vorhanden. Die zweite Schicht ist bevorzugt punktsymmetrisch in Bezug auf einen Punkt auf der Rotationsachse des Bremsrotors.

Bei der Kupplungsvorrichtung ist der Bremsbereich zumindest teilweise zylindermantelförmig ausgebildet und ist die zweite Schicht aus einem ringförmigen Material gebildet.

Hierdurch ist eine vorteilhafte Anordnung des Bremsbereichs in einem bezüglich der radialen Gesamtausdehung der Wirbelstrombremse weit radial außen liegenden Bereich möglich, wodurch das Bremsmoment erhöht wird, da einerseits die Fläche des Bremsbereich größer ist und andererseits der Abstand zur Rotationsachse.

Bevorzugt weist der Bremsrotor ein topfartiges Bauteil aus einem elektrisch leitenden Material auf, wobei der Wandbereich dieses Bauteils Teil des Bremsbereichs ist. Dieser Wandbereich ist zylindermantelförmig ausgebildet und auf diesen Wandbereich wird außen (im Falle eines Innenstators) die ringförmig vorgeformte zweite Schicht befestigt.

Bei einer weiteren erfindungsgemäßen Kupplungsvorrichtung ist die zweite Schicht mittels einer Presspassung an die zweite Seitenfläche befestigt. Bei einem weiteren erfindungsgemäßen Verfahren wird die zweite Schicht durch einen Aufpressvorgang an die zweite Seitenfläche befestigt.

Hierdurch wird eine gleichmäßig haftende, einfach zu realisierende Befestigung der zweiten Schicht erreicht. Bevorzugt wird auf den Wandbereich des topfartigen Bauteils des Rotors außen (im Falle eines Innenstators) die ringförmig vorgeformte zweite Schicht aufgepresst.

Bei einem weiteren erfindungsgemäßen Verfahren wird die zweite Schicht ringförmig vorgeformt und der Aufpressvorgang beinhaltet ein Aufpressen der ringförmig vorgeformten zweiten Schicht auf einen zylindermantelförmigen Wandbereich des Bremsenrotors.

Bei einer weiteren erfindungsgemäßen Kupplungsvorrichtung ist die zweite Schicht radial außerhalb der ersten Schicht angeordnet und der Bremsenstator weist einen Innenstator auf, der die Spule enthält.

Somit ist die Spule radial innerhalb der ersten Schicht angeordnet. Hierdurch wird eine besonders kompakte Bauweise erreicht, bei welcher der Bremsbereich außerdem einen großen Radius aufweisen kann, so dass das Bremsmoment sehr vorteilhaft ist.

Bei einer weiteren erfindungsgemäßen Kupplungsvorrichtung ist zwischen dem Innenstator und der ersten Schicht ein minimaler Luftspalt vorhanden, der kleiner ist als ein minimaler Luftspalt zwischen der zweiten Schicht und einem der zweiten Schicht benachbarten Statorbauteil.

Hierdurch ist der Bremsenrotor gegenüber dem Innenstator mit dem kleinsten Luftspalt beabstandet. Dies ist möglich, da andere Luftspalte an Einfluss verlieren, da sich der magnetische Kreis bereits in der zweiten Schicht schließen kann. Durch das Vorsehen größerer Abstände bzw. Luftspalte gegenüber der zweiten Schicht oder anderen Statorbauteilen können Fehlfunktionen in Folg einer Berührung des Rotors mit äußeren Bauteilen des Stators vermieden werden.

Ein Statorbauteil ist ein Bauteil, welches gegenüber dem Bremsenrotor relativ verdrehbar ist. Es kann ein Teil eines Innenstators oder Außenstators sein, bevorzugt eines Außenstators.

Unter einem minimalen Luftspalt wird bevorzugt der Luftspalt zwischen zwei Bauteilen an der Stelle des kleinsten Abstands dieser Teile verstanden.

Bei der Kupplungsvorrichtung ist die Ausdehnung der zweiten Schicht in axialer Richtung größer als in radialer Richtung.

Hierdurch wird eine besonders großflächige Ausdehnung der zweiten Schicht senkrecht zum einwirkenden Magnetfeld erreicht und somit eine höhere Effizienz.

Bei einer weiteren erfindungsgemäßen Kupplungsvorrichtung ist die zweite Schicht dicker als die erste Schicht.

Bevorzugt ist das Schichtdickenverhältnis der zweiten Schicht zur ersten Schicht im Bereich von größer als 1:1 bis inklusive 1,5:1, bevorzugt größer als 1,5:1, besonders bevorzugt größer oder gleich 2:1, ganz besonders bevorzugt größer oder gleich 4:1. Hierdurch ergeben sich jeweils vorteilhafte Verhältnisse von magnetischer Permeabilität und elektrischer Leitfähigkeit des Bremsbereichs. In der praktischen Anwendung erzielen Schichtdickenverhältnisse von 1:1 - 1,5:1 einen ausreichend vorteilhaften Effekt.

Beispielhaft für mögliche Ausführungsformen der Erfindung zeigen
**Fig. 1** eine Prinzipdarstellung einer erfindungsgemäßen Kupplungsvorrichtung mit Wirbelstrombremse,
**Fig. 2** eine perspektivische Schnittdarstellung der Wirbelstrombremse gemäß dem Stand der Technik,
**Fig. 3a** eine Schnittdarstellung einer erfindungsgemäßen Wirbelstrombremse und
**Fig. 3b** eine Schnittdarstellung der erfindungsgemäßen Wirbelstrombremse aus Fig. 3 entlang A-A.

**Figur 1** zeigt eine erfindungsgemäße Kupplungsvorrichtung 102 mit Wirbelstrombremse 300. Die Kupplungsvorrichtung 102 weist eine Betätigungseinrichtung 204 auf, die wiederum eine elektrische Wirbelstrombremse 300 aufweist. Die Wirbelstrombremse 300 weist einen Bremsenstator 303 mit wenigstens einer Spule 320 und einen Bremsenrotor 302 mit einem Bremsbereich 323 auf. Der Bremsbereich 323 weist eine erste Schicht 324 auf, die elektrisch leitend ist und die eine erste Seitenfläche 324.1 und eine zweite Seitenfläche 324.2 aufweist. Die erste Seitenfläche 324.1 ist der Spule 320 zugewandt und die zweite Seitenfläche 324.2 ist der Spule 320 abgewandt. Der Bremsbereich 323 weist eine zweite Schicht 325 auf, die magnetisch ist und die mit der zweiten Seitenfläche 324.2 verbunden ist.

Im Betrieb der Kupplungseinrichtung 102 wird durch Aktivieren der Wirbelstrombremse 300, d.h. durch Bestromung der Spule 320 ein Magnetfeld erzeugt, welches in der ersten Schicht 324 Wirbelströme erzeugt. Durch die zweite Schicht 325 schließt sich der magnetische Kreis (gestrichelt angedeutet) in der zweiten Schicht 325 und somit bereits im Bremsenrotor 302.

Hierdurch wird insbesondere vermieden, dass das Magnetfeld noch einen weiteren Luftspalt z.B. zu einem Außenstator passieren muss. Somit kann der Abstand zum Außenstator oder einem anderen Bauteil in der Nähe des Bremsenrotors 302 vergrößert und somit die Betriebssicherheit erhöht werden. Außerdem gewinnt der Bremsenrotor 302 an Wärmekapazität hinzu, wodurch einer Überhitzung besser vorgebeugt ist und ein Wirkungsgrad aufgrund der geringeren Luftspaltdistanz des magnetischen Kreises wird erreicht.

**Figur 2** zeigt eine perspektivische Schnittdarstellung der Wirbelstrombremse 300 gemäß dem Stand der Technik. Sie weist einen Bremsenstator 303 und einen Bremsenrotor 302 auf. Der Bremsenstator 303 weist einen Innenstator 304 und einen Außenstator 306 auf. An dieser Stelle wird auf Fig. 4 der deutschen Patentanmeldung 10 2013 223 044.3 verwiesen, deren Bezugszeichen weiter verwendet werden und welche den Innenstator 304 detaillierter zeigt. Der Innenstator 304 weist einen ersten Klauenpol 308 mit einem Scheibenabschnitt 310 und Polklauen, wie 312, auf. Der Innenstator 304 weist einen zweiten Klauenpol 314 mit einem Scheibenabschnitt 316 und Polklauen, wie 318, auf. Der Innenstator 304 weist eine Zentralspule 320 auf. Die Polklauen 312 des ersten Klauenpols 308 sind an dem Scheibenabschnitt 310 radial außenseitig angeordnet. Die Polklauen 312 des ersten Klauenpols 308 sind jeweils zu dem Scheibenabschnitt 310 in etwa 90° gewinkelt und weisen jeweils ein freies schmal zulaufendes Ende auf. Die Polklauen 312 des ersten Klauenpols 308 sind an dem Scheibenabschnitt 310 in Umfangsrichtung verteilt angeordnet. Zwischen den Polklauen 312 des ersten Klauenpols 308 sind Lücken gebildet. Die Polklauen 318 des zweiten Klauenpols 314 sind an dem Scheibenabschnitt 316 radial außenseitig angeordnet. Die Polklauen 318 des zweiten Klauenpols 314 sind jeweils zu dem Scheibenabschnitt 316 in etwa 90° gewinkelt und weisen jeweils ein freies schmal zulaufendes Ende auf. Die Polklauen 318 des zweiten Klauenpols 314 sind an dem Scheibenabschnitt 316 in Umfangsrichtung verteilt angeordnet. Zwischen den Polklauen 318 des zweiten Klauenpols 314 sind Lücken gebildet. Der erste Klauenpol 308 mit seinem Scheibenabschnitt 310 und der zweite Klauenpol 314 mit seinem Scheibenabschnitt 316 sind beidseits der Zentralspule 320 angeordnet. Die Polklauen 312 des ersten Klauenpols 308 und die Polklauen 318 des zweiten Klauenpols 314 umgreifen die Zentralspule 320 radial außenseitig. Die freien Enden der Polklauen 312 des ersten Klauenpols 308 und die freien Enden der Polklauen 318 des zweiten Klauenpols 314 sind einander entgegengerichtet. Die Polklauen 312 des ersten Klauenpols 308 und die Polklauen 318 des zweiten Klauenpols 314 greifen wechselnd ineinander. Der erste Klauenpol 308 und der zweite Klauenpol 314 umgreifen die Zentralspule 320 radial innenseitig. Der Bremsenrotor 302 weist eine topfartige Form mit einem Bodenabschnitt 322 und einem Bremsbereich mit Wandabschnitt und erster Schicht 324 auf. Der Bremsenrotor 302 ist mit seinem Bodenabschnitt 322 an dem zweiten Klauenpol 314 und mit seinem Wandabschnitt mit erster Schicht 324 radial außenseitig des Innenstators 304 angeordnet. Der Außenstator 306 ist spulenlos ausgeführt und weist eine dünne, flachringartige Form auf. Der Außenstator 306 ist magnetisch permeabel. Der Außenstator 306 ist radial außenseitig des Bremsenrotors 302 angeordnet. Der Innenstator 304 und der Außenstator 306 sind mit einem Trägerteil 326 fest verbunden. Das Trägerteil 326 weist einen Flanschabschnitt und einen Nabenabschnitt auf. Das Trägerteil 326 und der Außenstator 306 bilden eine gehäuseartige Aufnahme für den Innenstator 304 und den Bremsenrotor 302. Der erste Klauenpol 308 ist an dem Flanschabschnitt des Trägerteils 326 angeordnet. Der Nabenabschnitt des Trägerteils 326 ragt durch eine zentrale Ausnehmung des Innenstators 304 hindurch. Der Bremsenrotor 302 ist mithilfe eines Lagers 328 drehbar an dem Nabenabschnitt des Trägerteils 326 gelagert.

Eine solche Wirbelstrombremse 300 weist zwischen dem Außenstator 306 und der ersten Schicht 324 einen Luftspalt auf und der magnetische Kreis muss sich zusätzlich über diesen Luftspalt schließen.

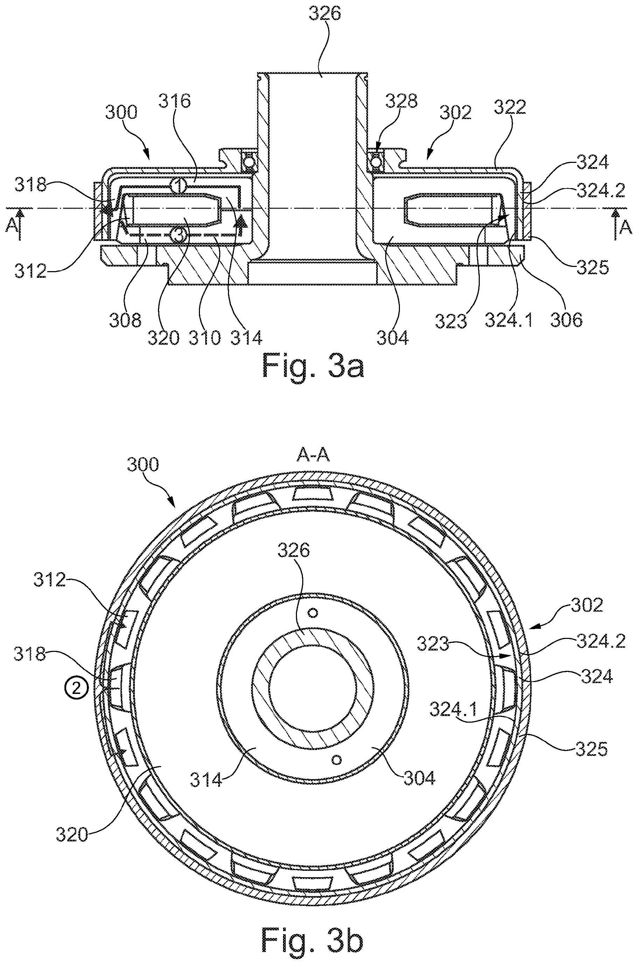

**Figur 3a** zeigt eine Schnittdarstellung einer erfindungsgemäßen Wirbelstrombremse 300 und **Figur 3b** zeigt eine Schnittdarstellung der erfindungsgemäßen Wirbelstrombremse aus Fig. 3 entlang A-A. Diese Wirbelstrombremse baut auf Fig. 1 und Fig. 2 auf. Im Unterschied zu der Wirbelstrombremse 300 aus Fig. 2 weist der Bremsenrotor 302 im Bremsbereich 323, d.h. hier dem Wandabschnitt mit erster Schicht 324, eine zweite Schicht 325 auf und es nicht zwingend ein Außenstator 306 notwendig. Ansonsten weist sie bevorzugt dieselben Merkmale wie die Wirbelstrombremse 300 aus Fig. 2 und Fig. 1 auf. Ferner ist der Bremsbereich 323 zumindest teilweise zylindermantelförmig ausgebildet und die zweite Schicht 325 ist aus einem ringförmigen Material gebildet. Die zweite Schicht 325 ist mittels einer Presspassung an der zweiten Seitenfläche 324.2 befestigt. Die zweite Schicht 324.2 ist radial außerhalb der ersten Schicht 324.1 angeordnet und der Bremsenstator 303 weist einen Innenstator 304 auf, der die Spule 320 enthält. Zwischen dem Innenstator 304 und der ersten Schicht 324 ist ein minimaler Luftspalt vorhanden, der kleiner ist als ein minimaler Luftspalt zwischen der zweiten Schicht 325 und einem der zweiten Schicht 25 benachbarten Statorbauteil. Die Ausdehnung der zweiten Schicht 325 ist in axialer Richtung größer als in radialer Richtung. Die zweite Schicht 325 ist dicker als die erste Schicht 324.

Im Betrieb der Kupplungseinrichtung verläuft der magnetische Kreis entlang des angedeuteten Pfads von ① über ② nach ③. Von einer Polklaue 318 des hier zweiten Klauenpols 314 verläuft er über den Luftspalt zwischen Innenstator 304 und der ersten Schicht 324 des Bremsenrotors 302. Er durchdringt die erste Schicht 324 (siehe ①) und geht in die zweite Schicht 325 über, wo er sich tangential in Richtung der beiden benachbarten Polklauen 312 des ersten Klauenpols 308 verteilt (siehe ②) und wieder zurück über die erste Schicht 324 den Luftspalt zwischen Innenstator 304 und der ersten Schicht 324 (siehe ③) in den ersten Klauenpol 308 verläuft.

Somit verläuft der magnetische Kreis nur noch über einen Luftspalt anstatt wie in Fig. 2 auch noch zwingend über den Luftspalt zwischen dem Außenstator 306 und dem Bremsenrotor 302. Die Sicherheit ist somit erhöht und zudem auch die Effizient, da man darauf verzichten kann, den Abstand zwischen einem Außenstator oder ähnlichen Bauteil gering zu halten und da die thermische Belastbarkeit höher ist.

Mit dieser Erfindung wurde eine Kupplungseinrichtung mit einer Wirbelstrombremse mit reduziertem Luftspalt vorgestellt. Dabei wird der magnetische Kreis nicht wie bisher über den äußeren Stator, sondern über einen mit dem Bremsenrotor (z.B. eine Bremsscheibe) mitrotierenden Zusatzschicht (z.B. in Ringform), geschlossen. Diese wird vorzugweise aus einem Material mit möglichst hoher Permeabilität ausgeführt und direkt auf den Wirbelstromring aufgepresst. Durch diese Anordnung kann eine Fehlfunktion durch die Berührung des Rotors und des äußeren Stators ausgeschlossen werden. Durch den verringerten Luftspalt wird weiterhin die magnetische Flussdichte im Luftspalt und damit das Bremsmoment der Wirbelstrombremse gesteigert. Weiterhin hat diese Variante den Vorteil, dass sich die thermische Masse der Scheibe vergrößert und sich diese damit bei der Generierung des Bremsmomentes für den Motorstart (bzw. im Schubbetrieb zur Ankopplung des Verbrenners) weniger erwärmt.

### Bezugszeichenliste

- 102: Kupplungsvorrichtung
- 204: Betätigungseinrichtung
- 300: Wirbelstrombremse
- 302: Bremsenrotor
- 303: Bremsenstator
- 304: Innenstator
- 306: Außenstator
- 308: erste Klauenpol
- 310: Scheibenabschnitt
- 312: Polklaue
- 314: zweiter Klauenpol
- 316: Scheibenabschnitt
- 318: Polklaue
- 320: Zentralspule
- 322: Bodenabschnitt
- 323: Bremsbereich
- 324: erste Schicht
- 324.1: erste Seitenfläche
- 324.2: zweite Seitenfläche
- 325: zweite Schicht
- 326: Trägerteil
- 328: Lager

## Patentansprüche

1. Kupplungsvorrichtung (102) mit
einer Betätigungseinrichtung (204), die eine elektrische Wirbelstrombremse (300) aufweist, wobei die Wirbelstrombremse (300) aufweist:
einen Bremsenstator (303) mit wenigstens einer Spule (320) und
einen Bremsenrotor (302) mit einem zumindest teilweise zylindermantelförmig ausgebildeten Bremsbereich (323), wobei
der Bremsbereich (323) eine erste Schicht (324), die elektrisch leitend ist und eine erste Seitenfläche (324.1) und eine zweite Seitenfläche (324.2) aufweist, und eine aus einem ringförmigen Material gebildete zweite Schicht (325) aufweist, die magnetisch ist und mit der zweiten Seitenfläche (324.2) verbunden ist, und
die erste Seitenfläche (324.1) der Spule (320) zugewandt ist und die zweite Seitenfläche (324.2) der Spule (320) abgewandt ist,
**dadurch gekennzeichnet, dass**
die Ausdehnung der zweiten Schicht (325) in axialer Richtung größer ist als in radialer Richtung.

2. Kupplungsvorrichtung (102) gemäß Anspruch 1, wobei die zweite Schicht (325) mittels einer Presspassung an die zweite Seitenfläche (324.2) befestigt ist.

3. Kupplungsvorrichtung (102) gemäß Anspruch 1 oder 2, wobei die zweite Schicht (325) radial außerhalb der ersten Schicht (324) angeordnet ist und der Bremsenstator (303) einen Innenstator (304) aufweist, der die Spule (320) enthält.

4. Kupplungsvorrichtung (102) gemäß Anspruch 3, wobei zwischen dem Innenstator (304) und der ersten Schicht (324) ein minimaler Luftspalt vorhanden ist, der kleiner als ein minimaler Luftspalt zwischen der zweiten Schicht (325) und einem der zweiten Schicht (325) benachbarten Statorbauteil ist.

5. Kupplungsvorrichtung gemäß einem der Ansprüche 1 bis 4, wobei die zweite Schicht (325) dicker als die erste Schicht (324) ist.

## Claims

1. Clutch apparatus (102) having
an actuating device (204) which has an electric eddy current brake (300), the eddy current brake (300) having:
a brake stator (303) with at least one coil (320), and
a brake rotor (302) with a brake region (323) of at least partially cylinder shell-shaped configuration,
the brake region (323) having a first layer (324) which is electrically conductive and a first side face (324.1) and a second side face (324.2), and having a second layer (325) which is formed from an annular material, is magnetic and is connected to the second side face (324.2), and
the first side face (324.1) facing the coil (320), and the second side face (324.2) facing away from the coil (320),
**characterized in that**
the extent of the second layer (325) is greater in the axial direction than in the radial direction.

2. Clutch apparatus (102) according to Claim 1, the second layer (325) being fastened to the second side face (324.2) by means of an interference fit.

3. Clutch apparatus (102) according to Claim 1 or 2, the second layer (325) being arranged radially outside the first layer (324), and the brake stator (303) having an inner stator (304) which comprises the coil (320).

4. Clutch apparatus (102) according to Claim 3, there being a minimum air gap between the inner stator (304) and the first layer (324), which minimum air gap is smaller than a minimum air gap between the second layer (325) and a stator component which is adjacent to the second layer (325).

5. Clutch apparatus according to one of Claims 1 to 4, the second layer (325) being thicker than the first layer (324).

## Revendications

1. Dispositif d'embrayage (102), comprenant un dispositif d'actionnement (204) qui présente un frein à courants de Foucault (300), le frein à courants de Foucault (300) présentant :
un stator de frein (303) comprenant au moins une bobine (320) et
un rotor de frein (302) comprenant une zone de freinage (323) réalisée au moins en partie sous forme d'enveloppe cylindrique,
la zone de freinage (323) présentant une première couche (324) qui est électriquement conductrice et qui présente une première surface latérale (324.1) et une deuxième surface latérale (324.2), et une deuxième couche (325) formée d'un matériau annulaire, qui est magnétique et qui est connectée à la deuxième surface latérale (324.2), et
la première surface latérale (324.1) étant tournée vers la bobine (320) et la deuxième surface latérale (324.2) étant opposée à la bobine (320),
**caractérisé en ce que**
l'étendue de la deuxième couche (325) dans la direction axiale est supérieure à l'étendue dans la direction radiale.

2. Dispositif d'embrayage (102) selon la revendication 1, dans lequel la deuxième couche (325) est fixée au moyen d'un ajustement par pressage à la deuxième surface latérale (324.2).

3. Dispositif d'embrayage (102) selon la revendication 1 ou 2, dans lequel la deuxième couche (325) est disposée radialement à l'extérieur de la première couche (324) et le stator de frein (303) présente un stator interne (304) qui contient la bobine (320).

4. Dispositif d'embrayage (102) selon la revendication 3, dans lequel, entre le stator interne (304) et la première couche (324) est prévu un entrefer minimal, qui est inférieur à un entrefer minimal entre la deuxième couche (325) et un composant de stator adjacent à la deuxième couche (325).

5. Dispositif d'embrayage selon l'une quelconque des revendications 1 à 4, dans lequel la deuxième couche (325) est plus épaisse que la première couche (324).
